# EUROPEAN PATENT APPLICATION

(11) **EP 4 768 321 A1**
(43) Date of publication of application: **01.07.2026**
(21) Application number: 25816189.2
(22) Date of filing: 29.04.2025
(51) Int. Cl.: B60L 58/10, B60L 1/00, H04L 12/10, H04L 12/40

(54) **POWER MANAGEMENT DEVICE, VEHICLE INCLUDING SAME, AND METHOD THEREOF**

(30) Priority: 29.05.2024 KR 20240070062
(71) Applicant: LG ENERGY SOLUTION, LTD., Seoul 07335 (KR)
(72) Inventor: CHOI, Bo Bi, Daejeon 34122 (KR); LEE, Ye Seul, Daejeon 34122 (KR)
(74) Representative: Plasseraud IP
(86) International application number: PCT/KR2025/005795
(87) International publication number: WO 2025/249775

(57) **Abstract**

A power management apparatus according to an embodiment disclosed in the this document includes a main controller, an auxiliary controller electrically connected to the main controller, and an end device electrically connected to the auxiliary controller and configured to receive power from a first battery or a second battery, wherein the end device may be configured to: operate based on first power transmitted from the first battery and operate based on second power supplied from the second battery when the first power is not supplied; and transmit at least a portion of the second power to the main controller or the auxiliary controller based on a power over ethernet (PoE).

## Description

### TECHNICAL FIELD

### CROSS-REFERENCE TO RELATED APPLICATION

The present application claims the benefit of the priority of Korean Patent Application No. 10-2024-0070062, filed on May 29, 2024, which is hereby incorporated by reference in its entirety.

### TECHNICAL FIELD

Embodiments disclosed in this document relate to a power management apparatus, a vehicle including the same, and a power management method.

### BACKGROUND ART

As electric vehicles driven by electricity become more spread, research and development on new vehicle architectures are actively conducted. For example, the electric vehicles may be driven by secondary batteries. Here, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

Such battery cells, battery modules, battery packs, or battery racks may be utilized in a variety of devices. For example, the batteries may be used in mobile devices such as cell phones, laptop computers, smart phones, and smart pads, as well as in electric vehicles (EVs, HEVs, PHEVs, etc.) and large-capacity energy storage systems (ESS).

The state and operation of these batteries may be managed and controlled by a battery management system (BMS). The battery management system may be included together with the battery within one device.

As automobile industries are changed, concepts of future mobilities such as software defined vehicles (SDVs) and purpose-built vehicles (PBVs) are gradually becoming more embodied. For example, SDVs refer to vehicles of which hardware is controlled and managed by software. The software according to such a SDV may define driving performance of the vehicle as well as its convenience features, safety features, emotional quality of the vehicle, and brand identity. With the architecture through the SDV, vehicle development costs may be reduced through commonization of ECUs and internalization of software. In addition, autonomous driving technology may be advanced through high-performance computers and networks based on electronic architecture.

### DISCLOSURE OF THE INVENTION

### TECHNICAL PROBLEM

It may be important that power management is performed efficiently under an SDV structure. To supply power from a battery pack to other components (e.g. zone controllers, end devices, etc.), an efficient and adaptive process needs to be developed.

An object of the embodiments disclosed in this document is to provide a power management apparatus and method, in which a problem situation is detected, and an accident is prevented by resetting at an appropriate timing while maximally maintaining power supply to a specific component (e.g., BMS) for power management, to prevent problems caused by interruption of communication or power between components in a vehicle under an SDV structure, and a vehicle including the power management apparatus.

Technical problems of the embodiments disclosed herein are not limited to the above-described technical problems, and other unmentioned technical problems would be clearly understood by one of ordinary skill in the art from the following description.

### TECHNICAL SOLUTION

A power management apparatus according to an embodiment disclosed in this document includes a main controller, an auxiliary controller electrically connected to the main controller, and an end device electrically connected to the auxiliary controller and configured to receive power from a first battery or a second battery.

For example, the end device may be configured to: operate based on first power transmitted from the first battery and operate based on second power supplied from the second battery when the first power is not supplied; and transmit at least a portion of the second power to the main controller or the auxiliary controller based on a power over ethernet (PoE) .

According to an embodiment, the first battery may include a low-voltage battery including a lead-acid battery, and the second battery may include a high-voltage battery including a lithium-ion battery.

According to an embodiment, the end device may be configured to operate based on the second power when the first power is 0 or less than a certain value.

According to an embodiment, the first battery may be configured to transmit an enable signal to at least one converter provided in an electrical path between the second battery and the end device when the first power is 0, the first power is less than a certain value, a charge amount is less than a specified value, or at least one of any combinations thereof.

According to an embodiment, the at least one converter may be configured to convert the second power transmitted from the second battery to the at least one converter so as to transmit the second power to the end device, based on the reception of the enable signal.

According to an embodiment, the end device may be configured to: monitor a power state of at least one of the main controller, the auxiliary controller, or any combination thereof; and stop and then restart the supply of the second power to the auxiliary controller when it is identified that an abnormality exists in the power state though the monitoring results.

According to an embodiment, the end device may be configured to: monitor an operation state of the second battery while operating based on the second power; and stop and then restart the supply of the second power to the auxiliary controller when it is identified that a problem occurs in the operation state.

According to an embodiment, the main controller and the auxiliary controller may be configured to be reset based on the stop and then restart of the supply of the second power.

According to an embodiment disclosed in this document, a vehicle including any one of the above-described power management apparatuses may be provided.

According to an embodiment disclosed in this document, a power management method includes allowing an end device to operate based on first power transmitted from a first battery, allowing the end device to operate based on second power supplied from a second battery when the first power is not supplied, and allowing the end device to transmit at least a portion of the second power to an auxiliary controller based on a power over ethernet (PoE).

According to an embodiment, the power management method may further include allowing the end device to operate based on the second power when the first power is 0 or less than a certain value.

According to an embodiment, the power management method may further include allowing the first battery to transmit an enable signal to at least one converter provided in an electrical path between the second battery and the end device when the first power is 0, the first power is less than a certain value, a charge amount is less than a specified value, or at least one of any combinations thereof, and allowing the at least one converter to convert the second power transmitted from the second battery to the at least one converter so as to transmit the second power to the end device, based on the reception of the enable signal.

According to an embodiment, the power management method may further include allowing the end device to monitor a power state of at least one of a main controller electrically connected to the auxiliary controller, the auxiliary controller, or any combination thereof, and allowing the end device to stop and then restart the supply of the second power to the auxiliary controller when it is identified that an abnormality exists in the power state though the monitoring results.

According to an embodiment, the power management method may further include allowing the end device to monitor an operation state of the second battery while operating based on the second power, and allowing the end device to stop and then restart the supply of the second power to the auxiliary controller when it is identified that a problem occurs in the operation state.

According to an embodiment, the power management method may further include allowing the main controller and the auxiliary controller to be reset based on the stop and then restart of the supply of the second power.

According to an embodiment disclosed in this document, a vehicle including any one of the above-described power management apparatuses may be disclosed.

### ADVANTAGEOUS EFFECTS

The power management apparatus and method according to the embodiments disclosed in this document may be implemented to ensure the safety of the vehicle including the power management apparatus while maintaining power transmitted to the component (e.g., BMS) that necessarily includes the operations such as the emergency shutdown.

The power management apparatus and method according to the embodiments disclosed in this document may minimize the data loss by managing and storing the information of the power management apparatus (or the vehicle) or the battery information in real time by maintaining the power supply to the end device even when the communication (or connection) between the upper component (e.g., the zone controller and/or the HPC) and the end device (e.g., the BMS) is cut off.

The power management apparatus and method according to the embodiments disclosed in this document may continuously check the robustness of the zone controller and the HPC in real time, and further may quickly and accurately detect the occurrence of the abnormal situation.

Moreover, the various effects recognized directly or indirectly from the disclosure may be provided.

### BRIEF DESCRIPTION OF THE DRAWINGS

FIG. 1 is a conceptual view illustrating a structure of a vehicle including a power management apparatus according to an embodiment disclosed in this document.
FIG. 2 is a conceptual view illustrating a structure of a vehicle including a power management apparatus according to an embodiment disclosed in this document.
FIG. 3 is a block diagram illustrating a configuration of a power management apparatus according to an embodiment disclosed in this document.
FIG. 4 is a conceptual view illustrating a configuration of a power management apparatus according to an embodiment disclosed in this document.
FIG. 5 is a conceptual view illustrating a configuration of a power management apparatus according to an embodiment disclosed in this document.
FIG. 6 is a flowchart illustrating a power management method according to an embodiment disclosed in this document.
FIG. 7 is a block diagram illustrating a configuration of hardware of a computing system for performing an operating method of the battery management apparatus according to an embodiment disclosed in this document.

### MODE FOR CARRYING OUT THE INVENTION

Hereinafter, various embodiments of the present invention are described with reference to the attached drawings. However, this is not intended to limit the present invention to specific embodiments, but should be understood to include various modifications, equivalents, and/or alternatives of the embodiments of the present invention.

In this document, a singular form of a noun corresponding to an item may include one or more of the items, unless the context clearly indicates otherwise. In this document, each of the phrases "A or B", "at least one of A and B", "at least one of A or B", "A, B, or C", "at least one of A, B, and C", and "at least one of A, B, or C" may include any one of the items listed together in that phrase, or all possible combinations of them. Terms such as "first", "second", "primary", "secondary", "A", "B", "(a)" or "(b)" may be used merely to distinguish one element from another element and do not limit the elements in any other respect (e.g., importance or order). When a component (e.g., a first component) is referred to as being "connected" or "coupled" to another component (e.g., a second component), with or without the terms "functionally" or "communicatively," it means that the component may be connected to the other component directly (e.g., wired or wirelessly) or through a third component.

Each component (e.g., module or program) described in this document may include one or more entities. According to various embodiments, one or more of the corresponding components or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by the module, the program, or other component may be performed sequentially, in parallel, iteratively, or heuristically, or one or more of the operations may be performed in a different order or omitted, or one or more other operations may be added.

The term "module" or "... part" as used in this document may include units implemented in hardware, software or firmware, and may be used interchangeably with terms such as logic, logic block, component, or circuit. The module may be a component that is configured integrally or a minimum unit of the component that performs one or more functions or a portion thereof. For example, according to an embodiment, the module may be implemented in the form of an application-specific integrated circuit (ASIC).

Various embodiments of this document may be implemented as software (e.g., a program or an application) including one or more instructions stored in a machine-readable storage medium (e.g., memory). For example, a processor of a device may recall at least one command among one or more instructions stored from the storage medium to execute the command. This enables the device operating to perform at least one function in response to at least one command invoked above. The one or more commands may include a code generated by a compiler or a code executable by an interpreter. The device-readable storage medium may be provided in the form of a non-transitory storage medium. Here, 'non-transitory' simply means that the storage medium is a tangible device and does not certain signals (e.g. electromagnetic waves), and the term does not distinguish cases, in which data is stored semi-permanently or temporarily in the storage medium, from each other.

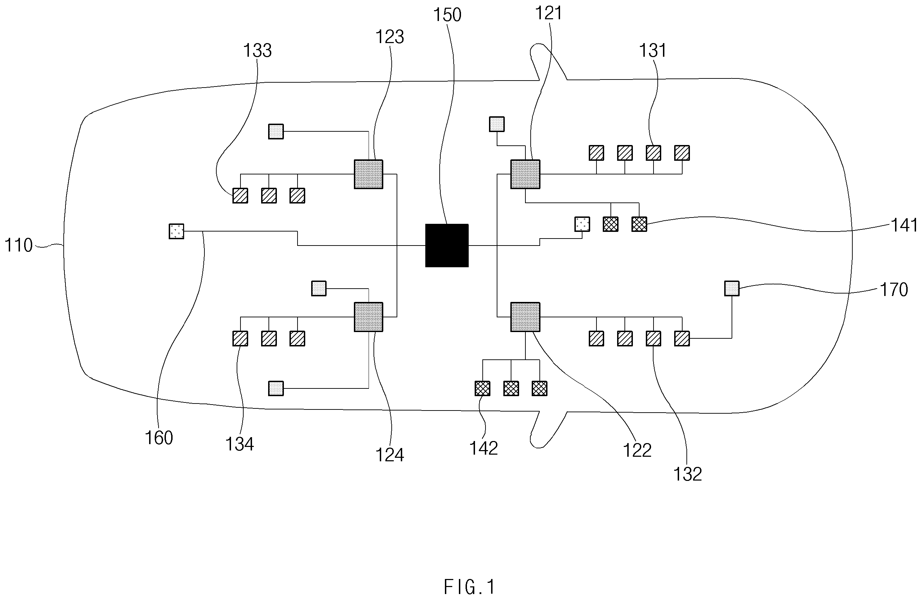

FIG. 1 is a conceptual view illustrating a structure of a vehicle including a power management apparatus according to an embodiment disclosed in this document.

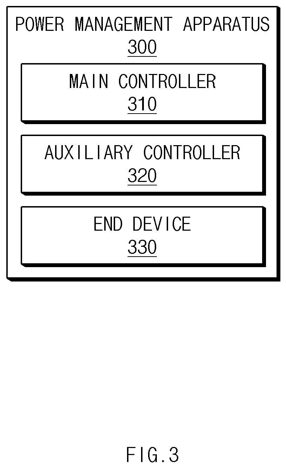

According to an embodiment, a power management apparatus (e.g., a power management apparatus 300 of FIG. 3) may include at least some of components included in a vehicle 110 according to an SDV architecture. The power management apparatus may, for example, manage power and/or data transmitted and received between the components of the vehicle 110.

For example, the vehicle 110 may include at least one of a first zone controller 121, a second zone controller 122, a third zone controller 123, a fourth zone controller 124, a first end device 131, a second end device 132, a third end device 133, a fourth end device 134, a first actuator 141, a second actuator 142, a high performance computer (HPC) 150, a transmission/reception path 160, an additional element 170, or any combination thereof. The power management apparatus for power management of the vehicle 110 may include at least some of the components included in the vehicle 110.

For example, the components according to the SDV architecture may include a hierachy structure of the HPC 150, the zone controller, and the end device, which are disposed in order.

For example, the HPC 150 may be connected to the first zone controller 121, the second zone controller 122, the third zone controller 123, and the fourth zone controller 124 and may transmit and receive various types of data with each zone controller.

For example, the first zone controller 121, the second zone controller 122, the third zone controller 123, and the fourth zone controller 124 may control the first end device 131, the second end device 132, the third end device 133, and the fourth end device 134, respectively. The end device may include, for example, at least one of a sensor for controlling the vehicle 110, a battery (or BMS) for driving the vehicle 110, or any combination thereof. For example, if one of the second end devices 132 is the BMS, the additional element 170 may be defined as a battery pack.

For example, the first zone controller 121 and the second zone controller 122 may control the first actuator 141 and the second actuator 142, respectively. The actuator may include, for example, at least one driving device for driving the vehicle 110.

For example, the components described above may perform communication based on a specified path (e.g., the transmission/reception path 160) via automotive ethernet.

The power management apparatus according to an embodiment of the present document may control and manage a communication process of power and/or data transmitted and received between the above-described components.

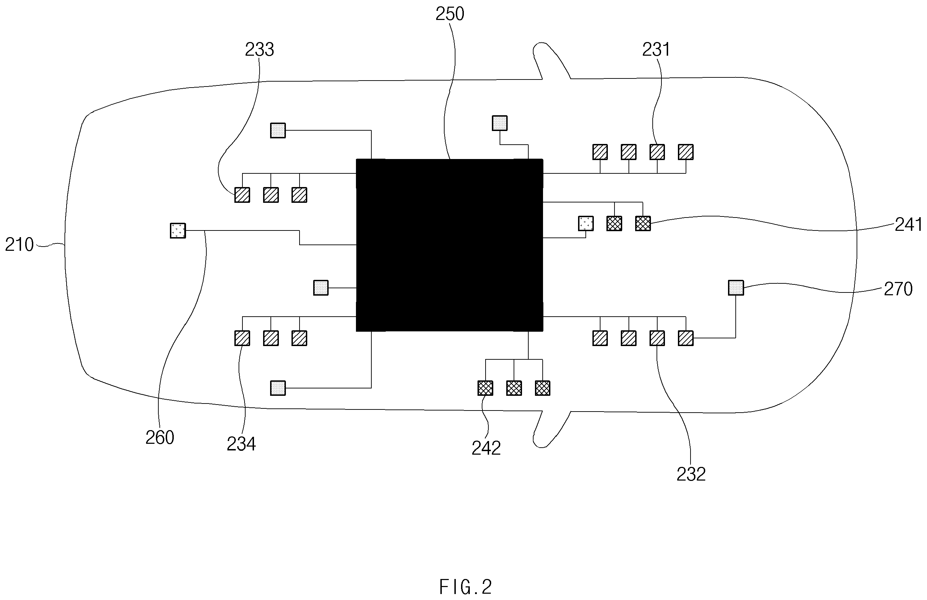

FIG. 2 is a conceptual view illustrating a structure of a vehicle including a power management apparatus according to an embodiment disclosed in this document.

In FIG. 2, description of components defined with the same names as in FIG. 1 may be replaced with the description of FIG. 1 described above.

For example, a self-vehicle 210 may include at least one of a first end device 231, a second end device 232, a third end device 233, a fourth end device 234, a first actuator 241, a second actuator 242, a high performance computer (HPC) 250, a transmission/reception path 260, an additional element 270, or any combination thereof. The power management apparatus for power management of the self-vehicle 210 may include at least some of the components included in the self-vehicle 210.

For example, the self-vehicle 210 according to FIG. 2 does not include a zone controller as compared to FIG. 1. That is, even if an SDV architecture is adopted, the self-vehicle 210 may be implemented with a structure in which the HPC 250 directly controls at least one end device, as in FIG. 2.

FIG. 3 is a block diagram illustrating a configuration of a power management apparatus according to an embodiment disclosed in this document.

Referring to FIG. 3, a power management apparatus 300 may include a main controller 310, an auxiliary controller 320, and an end device 330.

According to an embodiment, the power management apparatus 300 may perform power and/or data management between the components for controlling the vehicle. For example, a self-driving vehicle may operate by the components according to an SDV architecture. For example, the SDV may have a hierarchy structure of a high performance computer (HPC), a zone, an end device, and a sensor/actuator, which are disposed in order. Here, the vehicle according to the SDV may be divided into a plurality of zones, and each zone may include a controller (e.g., zone controller) for controlling components of a lower layer, which are included in the zone. The zone controller may be electrically connected to the HPC and may transmit and receive various signals. The above-described contents are exemplary, and the embodiments of the present invention are not limited thereto. For example, according to another embodiment according to the SDV architecture (e.g., the SDV architecture embodiment according to FIG. 2), the HPC and the end device are operatively connected, and the zone may be omitted.

For example, a main controller 310 may correspond to the HPCs 150 and 250 of FIG. 1 and/or FIG. 2, and an auxiliary controller 320 may correspond to the zone controller 121, 122, 123, or 124 of FIG. 1. In FIG. 1, the auxiliary controller 320 is illustrated as one, but this is exemplary, and a data management device may include a plurality of auxiliary controllers which correspond to the plurality of zones, respectively.

For example, an end device 330 may be at least one of the end devices of FIG. 1 and/or FIG. 2. The end device 330 may include, for example, a battery management system (BMS) and may include at least one MCU for controlling a battery provided for driving the vehicle.

The power management apparatus 300 may transmit and receive at least one of power, data (e.g., wake-up packets), control signals, or any combination thereof to components included in an electronic device. In an embodiment, the electronic device may be a mobile device (e.g., a mobile phone, a laptop computer, a smart phone, a smart pad, etc.), an electric vehicle (e.g., an EV, a hybrid EV (HEV), a plug-in HEV (PHEV), a fuel cell EV (FCEV)), an energy storage system (ESS), or a battery swapping system (BSS). In an embodiment, the electronic device may include a vehicle (e.g., an electric vehicle, a hybrid vehicle, etc.) and a mobile device that is driven based on electrical energy. In other words, for example, a power management apparatus 300 may be included in the vehicle and configured to manage power for an operation of the vehicle.

Hereinafter, the operation of the power management apparatus 300 may be performed by the battery management system (BMS) within the vehicle and the battery BMS provided within a battery pack, and may also be performed in various devices such as a server, a cloud, a charger, or a charger/discharger.

According to an embodiment, the main controller 310 and the auxiliary controller 320 may be electrically connected, and the auxiliary controller 320 and the end device 330 may be electrically connected.

For example, the main controller 310 and the auxiliary controller 320 may be electrically connected. The main controller 310 and the auxiliary controller 320 may be electrically connected to, for example, other components (e.g., at least one end device). The end device 330 may include, for example, the battery management system (BMS).

According to an embodiment, each of the main controller 310 and the auxiliary controller 320 may include one or more processors corresponding to a first zone and a second zone of the vehicle. The auxiliary controller 320 may include, for example, one or more controllers. In other words, the auxiliary controller 320 may include one or more controllers corresponding to an n-th zone. The main controller 310 and the auxiliary controller 320 may be electrically connected. The main controller 310 and at least one auxiliary controller 320 may be electrically connected to the end device 330 provided for controlling, for example, the battery pack included in the vehicle. The end device 330 and the battery pack may be implemented as a single module (e.g., the battery management system (BMS)).

For example, each processor included in each of the main controller 310 and the auxiliary controller 320 may include a central processing unit, an application processor, a graphics processing unit, a neural processing unit (NPU), an image signal processor, a sensor hub processor, or a communication processor.

Functions and operations of the power management apparatus 300 described below may be performed by one processor (or the main controller 310 and/or the auxiliary controller 320), or each function may be separated at least partially and performed by a plurality of processors.

According to an embodiment, a zone corresponding to the auxiliary controller 320 may be one of plurality of zones of the physically separated vehicle. For example, the plurality of zones may include a front zone including a front area of the vehicle, a rear zone including a rear area, a left zone including a left area, and a right zone including a right area.

According to an embodiment, each zone may include a controller (e.g., an auxiliary controller 320) for controlling and managing components for the operation of the vehicle (e.g., a sensor, a actuator, a camera, a driving and braking device, a battery, etc.).

According to an embodiment, the end device 330 may receive power from a first battery or a second battery.

For example, the first battery may include a low-voltage battery including a lead-acid battery, and the second battery may include a high-voltage battery including a lithium-ion battery.

For example, the end device 330 may operate (or be driven) based on first power received from the first battery. The end device 330 may continuously monitor whether the first power is being supplied normally and/or a charge amount, a voltage, a temperature, etc., of the first battery.

For example, when the supply of the first power to the end device 330 is interrupted, the end device 330 may operate (or be driven) based on the second power supplied from the second battery.

For example, if the first power is 0 or less than a certain level, the end device 330 may operate based on the second power. This case may be defined as a situation in which the first battery is discharged and thus is no longer supply the first power, or the first battery is in an abnormal operation state so as not to normally transmit the first power.

For example, if the first power is 0, the first power is below a certain value, the charge amount of first battery is below a specified value, or at least one of combinations thereof, the first battery may transmit an enable signal to at least one converter provided in the electrical path between the second battery and the end device.

In the above example, the value may be a user-defined and/or developer-defined changeable set value.

For example, the end device 330 may be electrically connected to the second battery and may control an operation state of the second battery, etc.

For example, the end device 330 may be electrically connected to the first battery and may monitor the operation state of the first battery. The end device 330 may, for example, transmit an enable signal to at least one converter using the first battery when it is determined that the above-described condition is satisfied as a result of monitoring the operation state of the first battery of the first power.

For example, at least one converter may include a switching mode power supply (SMPS) and/or a DC/DC converter.

For example, at least one converter may convert second power transmitted from the second battery to transmit the second power to the end device 330 based on the reception of the enable signal from the first battery.

For example, the voltage corresponding to the first power supplied by the first battery may be 12 V.

For example, a voltage corresponding to the power initially supplied by the second battery may be 400 V, and a voltage corresponding to the power converted and transmitted to the end device 330 may be 12 V.

For example, the end device 330 may supply power to peripheral devices based on a power over ethernet (PoE) or power over data line (PoDL). For example, the end device 330 may transmit the power received from the first battery and/or the second battery to the auxiliary controller 320 and/or the main controller 310 based on the PoE.

For example, the end device 330 may monitor the power state and/or operation state of at least one of the main controller 310, the auxiliary controller 320, the first battery, the second battery, or any combination thereof, and may stop and then restart the power supply if an abnormality is determined through the monitoring results.

For example, if it is identified that there is the abnormality in the power state through the monitoring results, the end device 330 may be configured to stop and then restart the supply of the second power to the main controller 310 and/or the auxiliary controller 320.

For example, if it is identified that there is the abnormality in the operation state through the monitoring results, the end device 330 may be configured to stop and then restart the supply of the second power to the main controller 310 and/or the auxiliary controller 320.

For example, the main controller 310 and/or the auxiliary controller 320 may be reset based on the interruption and subsequent restart of the supply of the second power. As a result, the power management apparatus 300 may resolve an error detected in the main controller 310 and/or auxiliary controller 320 by resetting the power ON/OFF without performing a full reset.

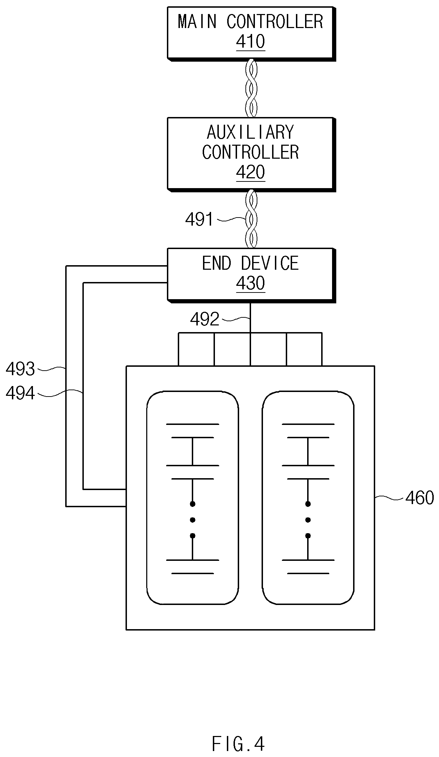

FIG. 4 is a conceptual view illustrating a configuration of a power management apparatus according to an embodiment disclosed in this document.

According to an embodiment, a power management apparatus (e.g., the power management apparatus 300 of FIG. 3) may include a main controller 410 (e.g., the main controller 310 of FIG. 3), an auxiliary controller (e.g., the auxiliary controller 320 of FIG. 3), an end device 430 (e.g., the end device 330 of FIG. 3), and a battery 460.

For example, the main controller 410, the auxiliary controller 420, and the end device 430 may transmit and receive power and/or data based on a specified communication protocol (e.g., PoE). For example, the end device 430 may transmit power supplied from the battery 460 to the main controller 410 and/or the auxiliary controller 420 through a communication path 491 based on the specified communication protocol.

For example, the end device 430 may monitor a state of the battery 460 using a sensing line 492. For example, the end device 430 may monitor at least one of an operation state, a voltage, a temperature, a charge amount, or any combination thereof of a first battery (e.g., a low-voltage battery including a lead-acid battery) and/or a second battery (e.g., a high-voltage battery including a lithium-ion battery) included in the battery 460 using a sensing line 492 in real time.

For example, the end device 430 may receive power from the first battery or the second battery based on the monitoring results.

For example, the end device 430 may receive first power from the first battery through a first supply path 493.

For example, when the first power is 0 (or the charge amount of first battery is 0), the value of the first power is below a certain value (or an abnormality occurs in the operation state of the first battery), and/or the charge amount of first battery is below a specified value, the end device 430 may operate by second power transmitted from the second battery.

For example, if the first power is 0, the first power is below a certain value, the charge amount of first battery is below a specified value (e.g., 10%), or at least one of any combination thereof, the end device 430 may transmit an enable signal to at least one converter using the first battery. At least one converter may be provided in the electrical path between the second battery and the end device 430.

For example, at least one converter may convert (e.g., down-convert from 400 V to 12 V) second power transmitted from the second battery based on the reception of the enable signal, and transmit the converted second power to the end device 430 through a second supply path 494.

For example, the end device 430 may monitor a power state of the main controller 410 and the auxiliary controller 420 through a designated communication protocol.

For example, if it is identified that there is an abnormality in the power state through the monitoring results, the end device 430 may stop and then restart the supply of the second power to the main controller 410 and the auxiliary controller 420.

For example, when an abnormality is detected in the operations of the main controller 410 and the auxiliary controller 420, or an abnormality is detected in the power being transmitted, the end device 430 may identify that the abnormality exists in the power state.

For example, the main controller 410 and the auxiliary controller 420 may be reset based on the interruption and subsequent restart of the supply of the second power.

The end device 430 may minimize a data loss by maintaining the operation of the end device 430 through the reset operation described above even when the connection with the main controller 410 and the auxiliary controller 420 is temporarily interrupted, to manage and store information about the battery 460 in real time.

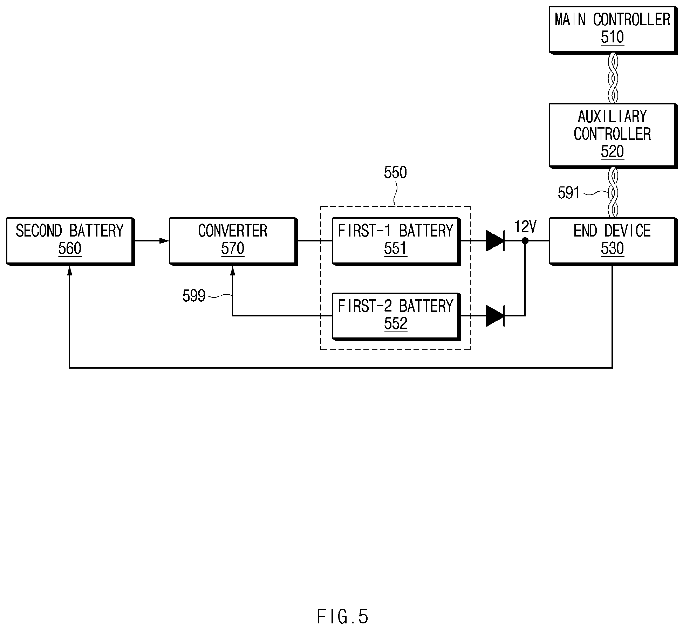

FIG. 5 is a conceptual view illustrating a configuration of a power management apparatus according to an embodiment disclosed in this document.

According to an embodiment, a power management apparatus (e.g., the power management apparatus 300 of FIG. 3) may include a main controller 510 (e.g., the main controller 310 of FIG. 3), an auxiliary controller 520 (e.g., the auxiliary controller 320 of FIG. 3), an end device 530 (e.g., the end device 530 of FIG. 1), a first battery 550, a second battery 560, and a converter 570.

For example, the components included in the power management apparatus may transmit and receive power and/or data based on the electrical path illustrated in FIG. 5. For example, the end device 530 may transmit and receive power and/or data with the main controller 510 and/or the auxiliary controller 520 based on a communication protocol based on a power of data line (PoDL) through a communication path 591.

For example, the first battery 550 may be a low-voltage battery including a lead-acid battery. The first battery 550 may include, for example, a first-1 battery 551 and a first-2 battery 552. The first-1 battery 551 and the first-2 battery 552 may be distinguished according to a physical structure of the lead-acid battery.

For example, the second battery 560 may be a high-voltage battery including a lithium-ion battery. The power management apparatus may control an operation (e.g., driving) of the vehicle based on the power transmitted from the second battery 560.

For example, the end device 530 may operate based on first power supplied from a first battery 550. The end device 530 may, for example, transmit the first power to the main controller 510 and/or the auxiliary controller 520 through a communication path 591.

For example, if an operation state of the first battery 550 and/or an intensity of the first power satisfies a specified condition, the end device 530 may transmit an enable signal to the converter 570 using the first battery 550.

For example, the end device 530 may transmit the enable signal using the first battery 550 through a signal path 599 between at least a portion of the first battery 550 (e.g., the first-2 battery 552) and the converter 570.

For example, the converter 570 may be provided on an electrical path between the second battery 560 and the end device 530.

For example, the converter 570 may convert second power transmitted from the second battery 560 to the converter 570 based on the reception of the enable signal and transmit the second power to the end device 530 through the first battery 550.

For example, if the first power is 0 or less than a certain value, the end device 530 may determine that a specified condition is satisfied to operate based on the second power transmitted from the second battery 560.

For example, if a charge amount of first battery 550 is below a specified value, the end device 530 may determine that the specified condition is satisfied to operate based on the second power transmitted from the second battery 560.

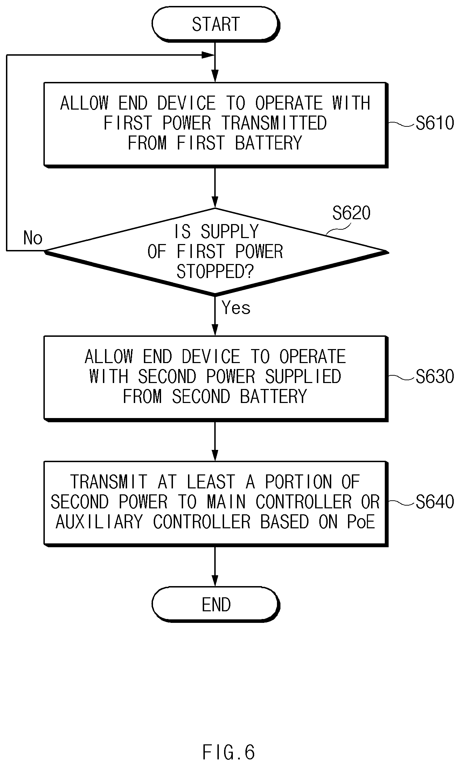

FIG. 6 is a flowchart illustrating a power management method according to an embodiment disclosed in this document.

According to an embodiment, a power management apparatus (e.g., the power management apparatus 300 of FIG. 3) may perform the operations disclosed in FIG. 6. For example, at least some of the components included in the power management apparatus (e.g., the main controller 310, the auxiliary controller 320, and the end device 530 of FIG. 3) may be set to perform operations of FIG. 6.

In following embodiments, operations S610 to S640 may be performed sequentially, but are not necessarily performed sequentially. For example, an order of the operations may be changed, and at least two operations may be performed in parallel. In addition, any content that corresponds to or overlaps the content described above with respect to FIG. 6 may be briefly explained or omitted.

Referring to FIG. 6, the power management method may include a process (S610) in which an end device operates with first power received from a first battery, a process (S620) in which the supply of the first power is interrupted, a process (S630) in which the end device operates with second power supplied from a second battery if the supply of the first power is interrupted, and a process (S640) in which at least a portion of the second power is transmitted to an auxiliary controller based on a PoE.

In operation S610, the end device may operate (or be driven) based on the first power supplied from the first battery including a low-voltage battery.

In operation S620, the power management apparatus may perform the operation S630 if the supply of the first power to the end device is interrupted, the first power is 0 or below a predetermined value, or a charge amount of first battery is below a specified value.

In operation S630, the end device may operate (or be driven) based on the second power supplied from the second battery including a high-voltage battery.

In operation S640, the auxiliary controller may operate based on the second power and may transmit the second power to the main controller or the auxiliary controller based on the PoE.

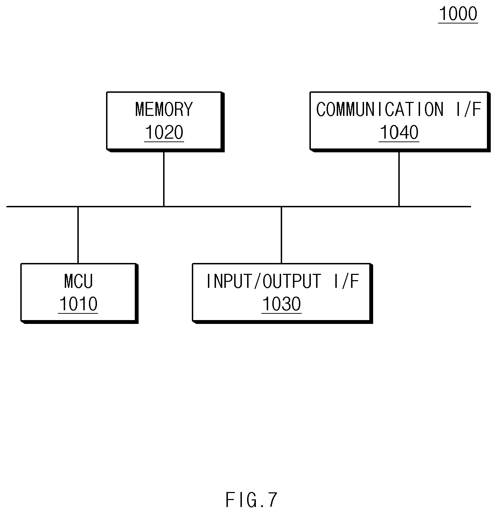

FIG. 7 is a block diagram illustrating a configuration of hardware of a computing system for performing an operating method of the battery management apparatus according to an embodiment disclosed in this document.

Referring to FIG. 7, a computing system 3000 according to an embodiment disclosed in the this document may include an MCU 1010, a memory 1020, an input/output I/F 1030, and a communication I/F 1040.

The MCU 1010 may be a processor that executes various programs stored in the memory 1020, processes various information including battery data through the programs, and performs the functions of the processor (or controller) included in the power management apparatus illustrated in FIG. 3 described above.

The memory 1020 may store various programs for performing the functions of the power management apparatus. In addition, the memory 1020 may store various types of information including battery data (voltage data, capacity data, etc.), differential capacity data, etc., and may include a constructed database.

The memory 1020 may be provided in plural, depending on a need. The memory 1020 may be volatile memory or nonvolatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., to the MCU 1010.

The communication I/F 1040, which is a component capable of transmitting and receiving various data to and from a server, may be various devices capable of supporting wired or wireless communication. For example, the power management apparatus may transmit and receive various types of information, including battery data, from a separately provided external server, etc., through the communication I/F 1040.

As such, a computer program according to an embodiment disclosed herein may be recorded in the memory 1020 and processed by the MCU 1010, thus being implemented as a module that performs functions shown in FIG. 1.

In the above, it is described that all components constituting the embodiment disclosed in this document are combined or operated in combination as one, but the embodiments disclosed in this document are not necessarily limited to such embodiments. That is, within the scope of the purpose of the embodiments disclosed in this document, all of the components may be selectively combined and operated one or more times.

In addition, the terms "include," "comprise," or "have," etc., as described above, unless otherwise specifically stated, imply that the corresponding component may be included, and therefore should be interpreted as including other components rather than excluding other components. All terms, including technical or scientific terms, unless otherwise defined, have the same meaning as commonly understood by one of ordinary skill in the art to which the embodiments disclosed herein belong. Terms such as terms that are generally used and have been in the dictionary should be interpreted as having meanings matched with contextual meanings in the art. In this document, unless defined clearly, terms are not ideally, excessively construed as formal meanings.

The above description is merely an illustrative description of the technical idea disclosed in this document, and those skilled in the art in the art to which the embodiments disclosed in this document belong may make various modifications and variations without departing from the essential characteristics of the embodiments disclosed in this document. Accordingly, the embodiments disclosed in this document are intended to illustrate rather than limit the technical ideas disclosed in this document, and the scope of the technical ideas disclosed in this document is not limited by these embodiments. The protection scope of the technical spirit disclosed in this document should be interpreted by the following claims, and all technical spirits within the same range should be understood to be included in the range of this document.

## Claims

1. A power management apparatus comprising:
a main controller;
an auxiliary controller electrically connected to the main controller; and
an end device electrically connected to the auxiliary controller and configured to receive power from a first battery or a second battery,
wherein the end device is configured to:
operate based on first power transmitted from the first battery and operate based on second power supplied from the second battery when the first power is not supplied; and
transmit at least a portion of the second power to the main controller or the auxiliary controller based on a power over ethernet (PoE).

2. The power management apparatus of claim 1, wherein the first battery comprises a low-voltage battery comprising a lead-acid battery, and
the second battery comprises a high-voltage battery comprising a lithium-ion battery.

3. The power management apparatus of claim 1, wherein the end device is configured to operate based on the second power when the first power is 0 or less than a certain value.

4. The power management apparatus of claim 1, wherein the first battery is configured to transmit an enable signal to at least one converter provided in an electrical path between the second battery and the end device when the first power is 0, the first power is less than a certain value, a charge amount is less than a specified value, or at least one of any combinations thereof,
wherein the at least one converter is configured to convert the second power transmitted from the second battery to the at least one converter so as to transmit the second power to the end device, based on the reception of the enable signal.

5. The power management apparatus of claim 1, wherein the end device is configured to:
monitor a power state of at least one of the main controller, the auxiliary controller, or any combination thereof; and
stop and then restart the supply of the second power to the auxiliary controller when it is identified that an abnormality exists in the power state though the monitoring results.

6. The power management apparatus of claim 1, wherein the end device is configured to:
monitor an operation state of the second battery while operating based on the second power; and
stop and then restart the supply of the second power to the auxiliary controller when it is identified that a problem occurs in the operation state.

7. The power management apparatus of claim 5, wherein the main controller and the auxiliary controller are configured to be reset based on the stop and then restart of the supply of the second power.

8. A vehicle comprising the power management apparatus of any one of claims 1 to 7.

9. A power management method comprising:
allowing an end device to operate based on first power transmitted from a first battery;
allowing the end device to operate based on second power supplied from a second battery when the first power is not supplied; and
allowing the end device to transmit at least a portion of the second power to an auxiliary controller based on a power over ethernet (PoE).

10. The power management method of claim 9, further comprising allowing the end device to operate based on the second power when the first power is 0 or less than a certain value.

11. The power management method of claim 9, further comprising:
allowing the first battery to transmit an enable signal to at least one converter provided in an electrical path between the second battery and the end device when the first power is 0, the first power is less than a certain value, a charge amount is less than a specified value, or at least one of any combinations thereof; and
allowing the at least one converter to convert the second power transmitted from the second battery to the at least one converter so as to transmit the second power to the end device, based on the reception of the enable signal.

12. The power management method of claim 9, further comprising:
allowing the end device to monitor a power state of at least one of a main controller electrically connected to the auxiliary controller, the auxiliary controller, or any combination thereof; and
allowing the end device to stop and then restart the supply of the second power to the auxiliary controller when it is identified that an abnormality exists in the power state though the monitoring results.

13. The power management method of claim 9, further comprising:
allowing the end device to monitor an operation state of the second battery while operating based on the second power; and
allowing the end device to stop and then restart the supply of the second power to the auxiliary controller when it is identified that a problem occurs in the operation state.

14. The power management method of claim 12, further comprising allowing the main controller and the auxiliary controller to be reset based on the stop and then restart of the supply of the second power.
